(19) Europäisches Patentamt
European Patent Office
Office européen des brevets

(11) Publication number: 0 129 824 B1

(12) EUROPEAN PATENT SPECIFICATION

(45) Date of publication of patent specification: 09.12.92 (51) Int. Cl.[5]: C08L 55/02, C08L 71/12

(21) Application number: 84106978.4

(22) Date of filing: 18.06.84

# (54) Flame retardant blends of ABS resin and polyphenylene ether.

(30) Priority: 28.06.83 US 508550

(43) Date of publication of application:
02.01.85 Bulletin 85/01

(45) Publication of the grant of the patent:
09.12.92 Bulletin 92/50

(84) Designated Contracting States:
DE FR GB IT NL

(56) References cited:
US-A- 3 855 277
US-A- 3 966 677

(73) Proprietor: GENERAL ELECTRIC COMPANY
1 River Road
Schenectady New York 12305(US)

(72) Inventor: Betts, Joseph Elwood
44 Park Lane
Westport Connecticut 06880(US)
Inventor: Abolins, Visvaldis
15 Haddington Lane
Delmar New York 12054(US)
Inventor: Holub, Fred Frank
2263 Preisman Drive
Schenectady New York 12309(US)

(74) Representative: Pratt, Richard Wilson et al
London Patent Operation G.E. Technical Services Co. Inc. Essex House 12/13 Essex Street
London WC2R 3AA(GB)

EP 0 129 824 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The polyphenylene ether resins are a known class of engineering thermoplastic polymers which can be molded into articles characterized by good properties. These resins and methods for their preparation are described in US-A-3,306,874 and 3,306,875 (to Allan Hay), and US-A-3,257,357 and 3,257,358 (to Gelu Stamatoff).

It is also known that polyphenylene ether resins can be admixed with styrene homopolymers or copolymers to produce blends which are moldable into articles having properties superior to those of each of the two polymers alone. Blends of this type are described by Cizek in US-A-3,383,435.

Compositions of polyphenylene ether resin and styrene resins are normally flammable, and to improve the flame retardancy there have been many proposals for adding flame retardant agents to such blends. Haaf discloses the usefulness of aromatic phosphate compounds and aromatic halogen compounds together as a flame retardant agent for compositions of polyphenylene ether resin and styrene resin, in US-A-3,639,506. Cooper and Katchman, in US-A-4,101,503, disclose impact modified polyphenylene ether resin compositions a preferred feature of which is the inclusion of a flame retardant agent which can be a halogenated organic compound in admixture with a phosphorous compound. Compositions of polyphenylene ether and styrene copolymers containing a flame retardant combination of an aromatic phosphate and an aromatic halogen compound are described in US-A-4,191,685 (to William R. Haaf). Robert Axelrod discloses flame retardant compositions of polyphenylene ether resin, styrene resin and cyclic phosphate having excellent appearance and physical properties after molding, in US-A-4,154,775.

## SUMMARY OF THE INVENTION

The present invention comprises thermoplastic compositions useful for preparation into shaped flame retardant articles, and which comprise (a) an amount of an ABS resin and (b) a flame retardant amount of an agent comprising a combination of (i) a polyphenylene ether resin, (ii) an organic phosphate, and (iii) a brominated bisphenoxy alkane, or a tetrabromobisphenol-A oligomeric polycarbonate, or a mixture of both.

The combined presence of the three components of the flame retardant agent in the compositions provides good self-extinguishing and drip retardant behavior.

## DESCRIPTION OF THE INVENTION

The blend compositions of this invention comprise an amount, preferably major, of an ABS resin. The term "ABS resin" is employed throughout this disclosure in its conventional sense to designate an established family of materials most commonly represented by a terpolymer or blend of acrylonitrile, butadiene and styrene polymers, but which also encompasses blends or terpolymers of homologous or analogous polymers. Thus, instead of acrylonitrile, the resin which constitutes component (a) of the present compositions can be based on other alkenyl cyanides, such as methacrylonitrile or ethacrylonitrile, or the like. Instead of polybutadiene, the latter can be replaced partly or entirely by other conjugated diolefin polymers, such as isoprene; pentadiene-1,3; the methyl,1,3-pentadienes;dimethyl butadiene-1,3; the 1,3 and 2,4-hexadienes, and the like. Likewise, in the preparation of the ABS resin, the styrene may be replaced in whole or in part by such vinyl aromatic compounds as alpha-methyl styrene, para-methyl styrene, vinyl toluenes, alpha-methyl vinyl toluenes, and the like.

As is known to those skilled in the art, there are principal methods of preparation for ABS resins. One of these involves generally the mechanical blending of the dry polymeric ingredients or mixing latexes of acrylonitrile-styrene copolymer resin and butadiene-based rubber. Resins made by the foregoing procedures are sometimes referred to as "Type A". In one procedure, described in

US-A-2,439,202, a tough molding composition is prepared by blending a butadiene-acrylonitrile rubber with an acrylonitrile-styrene resin. Variants of this procedure are also known, in which the acrylonitrile content of the rubber is reduced or replaced with polybutadiene rubber, styrene-butadiene rubber, acrylic elastomers or natural rubber, and these too are described in the literature. See ENCYCLOPEDIA OF POLYMER SCIENCE AND TECHNOLOGY, John Wiley and Sons, Inc., Volume 1, pages 436-444 (1964).

A second method involves polymerization of a styrene-acrylonitrile mixture in the presence of a polybutadiene latex, or in the presence of other elastomers or mixtures of an acrylonitrile-styrene copolymer latex and a polybutadiene latex, to produce a resin which is sometimes referred to as "Type B". This polymerization procedure is usually carried out in an emulsion, but suspension techniques are also sometimes employed. For a further description of these types of procedures, reference may be made to the ENCYCLOPEDIA OF POLYMER SCIENCE AND TECHNOLOGY, supra, and the patent literature cited

therein.

The polyphenylene ether resin component of the flame retardant is preferably a homo- or copolymer having units of the formula

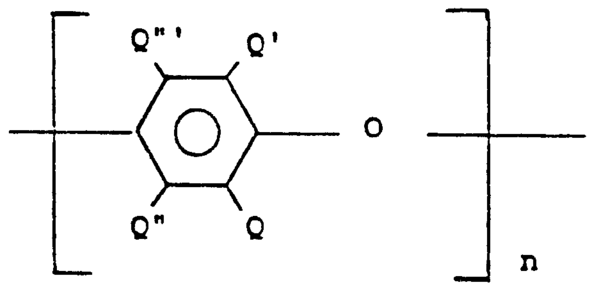

wherein Q, Q', Q'' and Q''', are independently selected from the group consisting of hydrogen, halogen, hydrocarbon radicals, halohydrocarbon radicals, hydrocarbonoxy radicals, and halohydrocarbonoxy radicals; and n represents the total number of monomer units and is an integer at least about 20, and preferably at least 50.

In general, the polyphenylene ether resins are self-condensation products of monohydric monocyclic phenols produced by reacting the phenols with oxygen in the presence of complex metal catalysts, with molecular weight being controlled by reaction time, longer times providing a higher average number of repeating units. Particular procedures are known to those skilled in the art and are described in the patent literature, including U.S. 3,306,874 and 3,306,875, and U.S. Patent Nos. 3,257,357 and 3,257,358, which have been referred to above.

Illustrative polymers which can be produced by such procedures and which are within the above general formula are: poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly-(2-methyl-6-phenyl-1,4-phenylene) ether; poly(2,6-dibenzyl-1,4-phenylene)ether; poly(2-ethoxy-1,4-phenylene)ether; poly(2-chloro-1,4-phenylene) ether; poly(2,6-dibromo-1,4-phenylene)ether; and the like. Examples of polyphenylene ethers corresponding to the above formula can be found in the above mentioned patents of Hay and Stamatoff.

Also included are polyphenylene ether copolymers, such as copolymers of 2,6-dimethylphenol with other phenols, for example, with 2,3,6-trimethylphenol or 2-methyl-6-butylphenol, etc.

For purposes of the present invention, an especially preferred family of polyphenylene ethers include those having alkyl substitution in the two positions ortho to the oxygen ether atom, i.e., those of the above formula wherein Q and Q' are alkyl, most preferably having from 1 to 4 carbon atoms. Illustrative members of this class are: poly(2,6-dimethyl-1,4-phenylene)ether; poly(2,6-diethyl-1,4-phenylene)ether; poly(2-methyl-6-ethyl-1,4-phenylene)ether; poly(2-methyl-6-propyl-1,4-phenylene) ether; poly(2,6-dipropyl-1,4-phenylene)-ether; poly(2-ethyl-6-propyl-1,4-phenylene)ether; and the like.

The most preferred polyphenylene ether resin for purposes of the present invention is poly(2,6-dimethyl-1,4-phenylene)ether.

The organic phosphate of the flame retardant agent, component (b) (ii), is preferably an aromatic phosphate compound having the formula

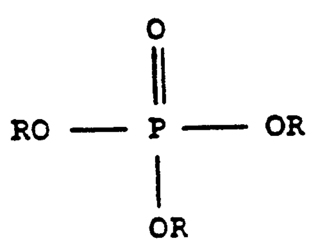

where R is the same or different and is alkyl, cycloalkyl, aryl, alkyl substituted aryl, halogen substituted aryl, aryl substituted alkyl, halogen, or a combination of any of the foregoing, provided at least one R is aryl.

Examples include phenylbisdodecyl phosphate, phenylbisneopentyl phosphate, phenyl-bis(3,5,5'-trimethylhexyl phosphate), ethyldiphenyl phosphate, 2-ethyl-hexyldi(p-tolyl) phosphate, bis-(2-ethylhexyl) p-tolylphosphate, tritolyl phosphate, bis-(2-ethylhexyl) phenyl phosphate, tri-(nonylphenyl) phosphate, di-(dodecyl) p-tolylphosphate, tri-cresyl phosphate, triphenyl phosphate, dibutylphenyl phosphate, 2-chloroethyldiphenylphosphate, p-tolyl bis (2,5,5'-trimethylhexyl) phosphate, 2-ethylhexyldiphenyl phosphate, and the like. The preferred phosphates are those those in which each R is aryl. Especially preferred is triphenyl phosphate, which may be either unsubstituted or substituted, for example, isopropylated triphenyl phosphate.

Alternatively, the aromatic phosphate can be a di- or polyfunctional compound or polymer having the formula

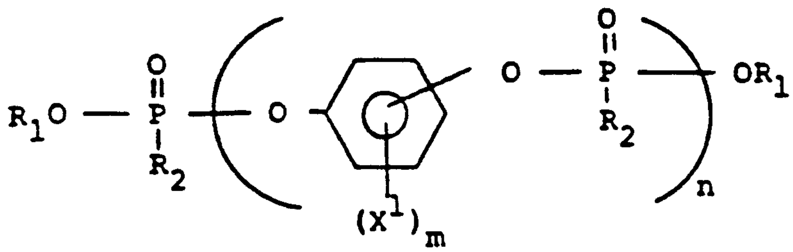

,

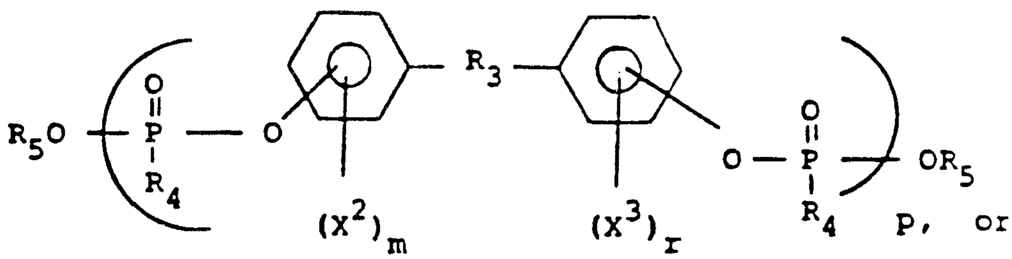

p, or

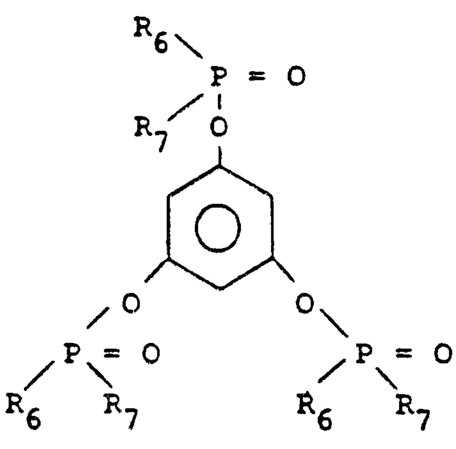

and mixtures thereof, wherein $R_1$, $R_3$ and $R_5$ are, independently, hydrocarbon, $R_2$, $R_4$, $R_6$ and $R_7$ are, independently, hydrocarbon or hydrocarbonoxy, $X^1$ ,$X^2$ and $X^3$ are halogen, m and r are 0 or integers from 1 to 4, and n and p are from 1 to 30.

Examples include the bis diphenyl phosphates of resorcinol, hydroquinone or bisphenol-A, respectively, or their polymeric higher molecular weight counterparts.

These phosphates and methods of their preparation are described in British Patent No. 2,043,083.

In preferred embodiments,the polyphenylene ether resin is present in amounts equivalent to or greater than the organic phosphate, and especially in a weight ratio of polyphenylene ether: organic phosphate of between 1:1 and 20:1.

In general, components (b) (i) and (b) (ii) are supplied in amounts sufficient to provide between about 5 and about 70 parts by weight of the former and between about 1 and about 20 parts by weight of the latter, based on 100 parts of resin in the composition, i.e., the ABS and polyphenylene ether resins combined.

Small amounts of a brominated bisphenoxy alkane, component (b) (iii), can further enhance the flame retardancy of the present compositions. This compound should be reasonably stable at elevated temperatures above 100 ° C., and relatively non-volatile, e.g., having a low volatility at temperatures of 100 to 150 ° C.

More specifically, the compound has the formula

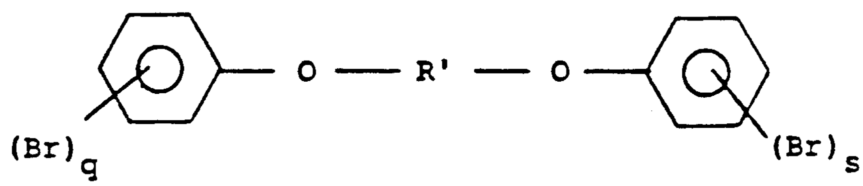

where R' is alkylene, straight or branched, having from 1 to 10 carbon atoms, and more preferably from 1 to about 6 carbon atoms; and q and s represent the total number of bromine atoms of each ring and are independently integers from 1 to 5.

The brominated bisphenoxy alkane is typically employed in minor proportions in the compositions. Amounts of between about 1 and about 20 parts by weight, based on the total resin weight, of this component are normally sufficient to decrease the average quenching time and/or to retard the tendency of the composition to drip molten resin, and such amounts are preferred.

Examples of brominated bis-phenoxy alkane compounds useful in the practice of this invention are 1,2-bis(2,4,6-tribromophenoxy)ethane; 1,3-bis(2,4,6-tribromophenoxy)propane; 1,4-bis(2,4,6-tribromophenoxy)-butane; 2,2-bis(4-bromophenoxy)propane,and 1,2-bis(2,3,4,5,6-pentabromophenoxy)ethane. Preferred are 1,2-bis(2,4,6-tribromophenoxy)ethane and 1,2-bis(2,3,4,5,6-pentabromophenoxy)ethane.

Preparation of component (b) (iii) may be accomplished by following the procedure described in U.S. Patent No. 4,016,138 (Anderson).

Also useful are flame retardant brominated polymers, especially tetrabromobisphenol-A oligomeric polycarbonate.

The compositions of this invention can also be formulated to include one or more supplementary ingredients to improve the chemical or physical properties of the moldings or to facilitate the processing during the molding cycle. These can be selected from among conventional additives for such purposes, including mineral fillers (e.g., clay), reinforcing fillers, strengthening fibers (e.g., glass fibers), plasticizers, stabilizers, antioxidants, melt viscosity reducers, pigments, dyes, and so forth. Such ingredients are generally added in amounts ranging from 1 to about 50% by weight, or more, based on the total composition weight.

For other property modification, it may be helpful to add a modifying polymer selected from among polymers having elastomeric properties. These may be co-or terpolymers of an elastomeric material, such as polybutadiene, polyisoprene or other rubbery polyolefin. Examples include polystyrene-polybutadiene block copolymers, polystyrene-polyisoprene block copolymers, polystyrene-polybutadiene-polystyrene block copolymers, polystyrene-polyisoprene-polystyrene block copolymers, polystyrene-polyethylene/polybutylene-polystyrene block copolymers, and so forth.

Preparation of the compositions may be accomplished by milling the ingredients at a temperature in the range between 310 and 450 ° F. (154 and 232 ° C), and molding the milled material at a temperature of 370 to 460 ° F. (188 to 238 ° C). Other methods of preparation are possible, however, as shown in some of the examples.

## DESCRIPTION OF THE SPECIFIC EMBODIMENTS

The invention is illustrated in the following examples. These are intended to show preferred or best embodiments. They should not be construed as a limitation on the scope of the invention. Amounts are in parts by weight.

## EXAMPLES 1-3

The ingredients noted below were milled on a two roll mill at a temperature of 320 to 360 ° F. (160 to 182 ° C.), and molded to 440 ° F. (227 ° C.) for ten minutes to provide moldings of the composition shown,

which were then evaluated for flame retardancy.

TABLE 1

| Ingredients | 1 | 2 | 3 |
|---|---|---|---|
| Acrylonitrile-butadiene-styrene resin | 80 | 70 | 100 |
| Poly(2,6-dimethyl-1,4-phenylene)ether resin | 20 | 30 | -- |
| Isopropylated triphenyl phosphate | 12 | 12 | 12 |
| 1,2-bis(2,4,6-tribromophenoxy)ethane | 4 | 4 | 4 |
| Vertical Burn Test, 1/8 inch (3/10 cm.)thick specimen | | | |
| Drip Characteristics | ND,ND,ND | ND,ND,ND | ND,ND,ND |
| Seconds to quench | | | |
| 1st ignition | 0,0,0 | 0,0,0 | >30,>30,>30 |
| 2nd ignition | 0,0,0 | 0,0,0 | Burns |

ND = No Drip

EXAMPLES 4-7

The compositions were prepared by milling the ingredients (two roll mill) at 310 to 320 ° F. (154 to 160 ° C.) and molding at 370 ° F. (188 ° C.) for 10 minutes. The results are shown in Table 2, below.

TABLE 2

| Ingredients | 4 | 5 | 6 | 7 |
|---|---|---|---|---|
| Acrylonitrile-butadiene-styrene resin | 100 | 70 | 70 | 70 |
| Poly(2,6-dimethyl-1,4-phenylene)ether resin | -- | 30 | 30 | 30 |
| Isopropylated triphenyl phosphate | -- | -- | 10 | 10 |
| 1,2-bis(2,3,4,5,6-pentabromophenoxy)ethane | -- | -- | -- | 4 |
| Vertical Burn Test, 1/8 inch (3/10 cm.) thick specimen | | | | |
| Drip Characteristics | ND,ND | ND,ND | ND,ND | ND,ND |
| Seconds to Quench | | | | |
| 1st ignition | >30,>30 | >30,>30 | >30,>30 | 3,3 |

ND = No Drip

EXAMPLES 8-9

Additional compositions according to the invention, containing antimony oxide synergistic agent, were prepared by milling the ingredients at 310-320 ° F. (154-160 ° C.) and compression molding at 370 ° F. (188 ° C.). The results are shown in Table 3.

TABLE 3

| Ingredients | 8 | 9 |
|---|---|---|
| Acrylonitrile-butadiene-styrene resin | 50 | 30 |
| Poly(2,6-dimethyl-1,4-phenylene)ether resin | 50 | 70 |
| Isopropylated triphenyl phosphate | 10 | 10 |
| 1,2-bis(2,4,6-tribromophenoxy)ethane | 5 | 5 |
| Antimony oxide | 2 | 2 |
| Vertical Burn Test (1/8" or 3/10 cm.) | | |
| Drip Characteristics | ND,ND | ND,ND |
| Seconds to quench | | |
| 1st ignition | 2,2 | 1,1 |
| 2nd ignition | 3,2 | 2,3 |

ND = No Drip

EXAMPLES 10-12

The compositions were prepared by milling the ingredients at 380-390 ° F. (193-199 ° C.) and molding for ten minutes at 450-460 ° F. (232-238 ° C.). The results are shown in the Table.

Table 4

| Ingredients | 10 | 11 | 12 |
|---|---|---|---|
| Acrylonitrile-butadiene-styrene resin | 50 | 50 | 50 |
| * Poly(2,6-dimethyl-1,4-phenylene ether) resin | 40 | 20 | 40 |
| * Isopropylated triphenyl phosphate | 10 | 5 | 10 |
| Styrene-ethylene-butylene-styrene block copolymer | 10 | 10 | 10 |
| Tetrabromobisphenol-A oligomeric polycarbonate | 10 | 10 | 20 |
| Bis diphenyl phosphate of resorcinol | -- | 10 | 10 |
| Antimony oxide | -- | 5 | -- |
| Properties | | | |
| Horizontal propagation test, after 30 seconds | ¼ in. (6/10 cm) | ¼ in. (6/10 cm) | ¼ in. (6/10 cm) |
| Horizontal Burn Test, 1/8 inch(3/10 cm)specimen | ND | ND | ND |
| Vertical Burn Test, 1/8 inch(3/10 cm)specimen | ND,ND | ND,ND | ND,ND |
| Seconds to quench, | | | |
| 1st ignition | 3,1 | 0,1 | 1,1 |
| 2nd ignition | 4,4 | 3,3 | 2,2 |

* pre-extruded together at 500-600°F. (260-316°C.)

ND = No Drip

COMPARATIVE EXAMPLE 13

The ingredients were milled at 440 to 450°F. (227 to 232°C.), and molded for ten minutes at 460°F. (238°C.).

Table 5

| Ingredients | |
|---|---|
| ABS resin | 50 |
| * Poly(2,6-dimethyl-1,4-phenylene ether)resin | 50 |
| * Bis diphenyl phosphate of resorcinol | 10 |
| Styrene-ethylene/butylene-styrene block copolymer | 20 |
| **Properties** | |
| Horizontal propagation, after 30 seconds | ¼ in. (6/10 cm.) |
| Horizontal Burn Test, 1/8 inch (6/10 cm.) specimen | ND |

* pre-extruded at 490-570°F. (254-299°C.)
ND = No Drip

EXAMPLES 14-15

The following compositions were prepared by milling the ingredients at 400-410 ° F. (204-210 ° C.), and molding for ten minutes at 460 ° F. (238 ° C.).

Table 6

| Ingredients | 14 | 15 |
|---|---|---|
| ABS resin | 50 | 50 |
| * Poly(2,6-dimethyl-1,4-phenylene ether) resin | 50 | 50 |
| * Bis diphenyl phosphate of resorcinol | 10 | 10 |
| Styrene-ethylene/butylene-styrene block copolymer | 20 | 20 |
| Tetrabromobisphenol-A oligomeric polycarbonate | -- | 30 |
| Antimony oxide | 5 | 5 |
| Horizontal propagation test, after 30 seconds | ¼ in. (6/10 cm.) | ¼ in. (6/10 cm.) |
| Horizontal Burn Test, 1/8 inch (3/10 cm.) specimen | ND | ND |

* pre-extruded at 490-570°F. (254-299°C.)

ND = No Drip

Obviously, other modifications and variations are possible in the light of the above disclosure. For instance, instead of poly(2,6-dimethyl-1,4-phenylene)ether resin, copolymers such as poly(2,6-dimethyl-co-2,3,6-trimethyl-1,4-phenylene)ether can be substituted. Clay filled or glass fiber reinforced counterparts of the compositions shown are also possible.

Optionally, the compositions of this invention can and often do also contain an additional compound selected from among those known to synergistically enhance the flame retardancy effect of brominated compounds. These are usually synergistic agents based on antimony or molybdenum. Preferably, the synergist is antimony oxide, as shown. Small amounts, e.g., less than 10% by weight, of this component are sufficient to enhance the flame retardancy effect.

## Claims

**1.** A thermoplastic composition comprising an admixture of:

(a) a resin comprised of an ABS resin; and

(b) an effective amount of a flame retardant agent, comprising (i) a polyphenylene ether resin, (ii) an organic phosphate, and (iii) a brominated bisphenoxy alkane or an oligomeric tetrabromobisphenol-A-polycarbonate or a mixture of both.

**2.** A composition according to Claim 1, in which component (a) is an acrylonitrile-butadienestyrene resin.

**3.** A composition according to Claim 1, in which the polyphenylene ether resin, (b) (i), is a homo-or copolymer having units of the formula

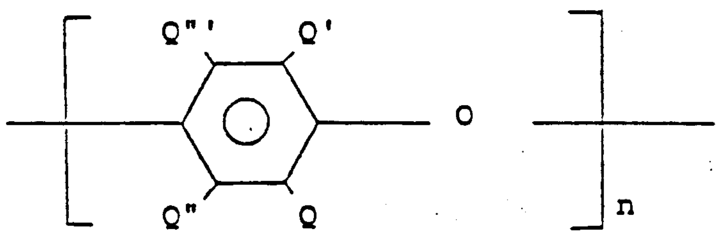

wherein Q, Q', Q'' and Q''' are independently selected from the group consisting of hydrogen, halogen, hydrocarbon radicals, halohydrocarbon radicals, hydrocarbonoxy radicals and halohydrocarbonoxy radicals; and n represents the total number of monomer units and is an integer of at least about 20.

**4.** A composition according to Claim 1, in which component (b) (i) is poly(2,6-dimethyl-1,4-phenylene) ether.

**5.** A composition according to Claim 1, in which the organic phosphate is an aromatic phosphate compound of the formula

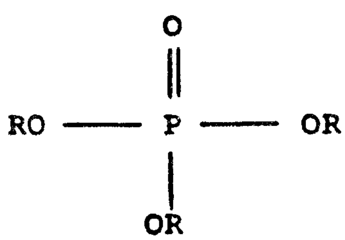

wherein R is the same or different and is alkyl, cycloalkyl, aryl, alkyl substituted aryl, halogen substituted alkyl, halogen, or a combination of any of the foregoing, provided at least one R is aryl.

**6.** A composition according to Claim 1, in which (b) (ii) is triphenyl phosphate.

**7.** A composition according to Claim 6, in which the triphenyl phosphate is isopropylated.

**8.** A composition according to Claim 1, in which component (b)(ii) is a di- or polyfunctional compound or polymer having the formula

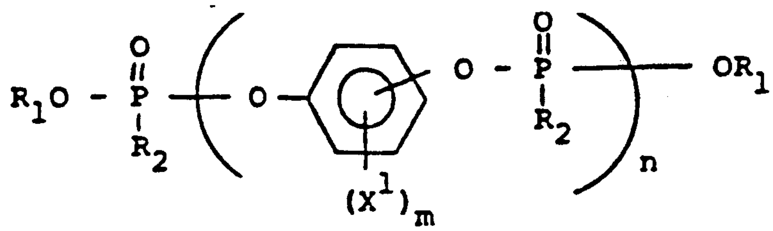

,

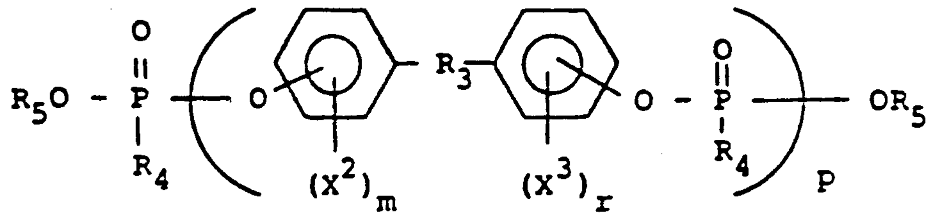

, or

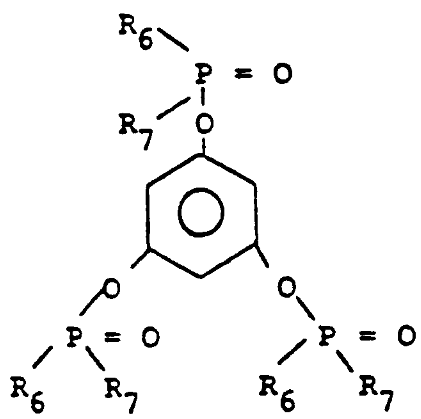

and mixtures thereof, wherein $R_1$, $R_3$ and $R_5$ are, independently, hydrocarbon, $R_2$, $R_4$, $R_6$ and $R_7$ are, independently, hydrocarbon or hydrocarbonoxy, $X^1$, $X^2$ and $X^3$ are halogen, m and r are 0 or integers from 1 to 4, and n and p are from 1 to 30.

**9.** A composition according to Claim 8, in which component (b)(ii) is a bis diphenyl phosphate of resorcinol.

**10.** A composition according to Claim 8, in which component (b)(ii) is a bis diphenyl phosphate of hydroquinone.

**11.** A composition according to Claim 8, in which component (b)(ii) is a bis diphenyl phosphate of bisphenol-A.

**12.** A composition according to Claim 1, in which (b)(iii) has the formula

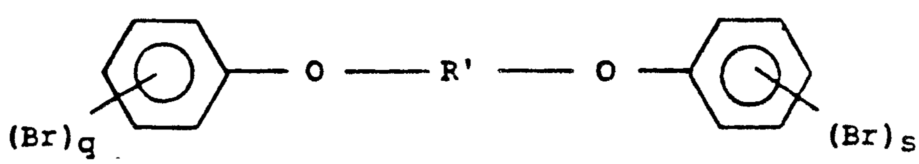

where R' is alkylene, straight or branched, having from 1 to 10 carbon atoms, and q and s represent the total number of bromine atoms on each ring and are independently integers from 1 to 5.

**13.** A composition according to Claim 1, in which (b)(iii) is 1,2-bis (2,4,6-tribromophenoxy) ethane.

**14.** A composition according to Claim 1, in which (b)(iii) is 1,2-bis(2,3,4,5,6-pentabromophenoxy) ethane.

**15.** A composition according to Claim 1, in which (b)(iii) is tetrabromobisphenol-A oligomeric polycarbonate.

**16.** A composition according to Claim 1, in which the weight ratio of (b)(i) to (b)(ii) is between 1:1 and 20:1.

**17.** A composition according to Claim 1, in which component (a) is present in a major amount, (b)(i) is present in an mount between about 5 and about 70 parts by weight, (b)(ii) is present in an amount between about 1 and about 20 parts by weight, and (b)(iii) is present in an amount between about 1 and about 20 parts by weight, based on 100 parts of (a) and (b)(i)combined.

**18.** A composition according to Claim 1, which also includes a synergistic agent for (b)(iii).

**19.** A composition according to Claim 18, in which the synergistic agent is an antimony compound.

**20.** A composition according to Claim 19, in which the antimony compound is antimony oxide.

**21.** A composition according to Claim 1, which includes a modifying elastomeric polymer.

**22.** A composition according to Claim 21, in which the modifying elastomeric polymer is a styrene-butadiene-styrene block copolymer.

**23.** A composition according to Claim 21, in which the modifying elastomeric polymer is a styrene-ethylene/butylene-styrene block copolymer.

**24.** A composition according to Claim 21, in which the modifying elastomeric polymer is a styrene-isoprene-styrene block copolymer.

**25.** A composition according to Claim 1, which also includes a filler.

## Patentansprüche

**1.** Thermoplastische Zusammensetzung enthaltend eine Mischung aus:
(a) einem Harz, bestehend aus einem ABS-Harz und
(b) einer wirksamen Menge eines flammhemmenden Mittels, enthaltend (I) ein Polyphenylenätherharz, (II) ein organisches Phosphat und (III) ein bromiertes Bisphenoxyalkan oder ein oligomeres Tetrabrombisphenol-A Polycarbonat oder eine Mischung von beiden.

**2.** Zusammensetzung nach Anspruch 1, in welcher die Komponente (a) ein Acrylnitril-Butadien-Styrolharz ist.

**3.** Zusammensetzung nach Anspruch 1, in welcher das Polyphenylenätherharz (b) (I) ein Homo- oder Copolymer mit Einheiten der Formel

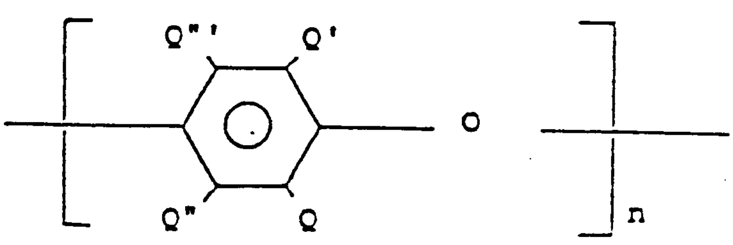

ist, worin Q, Q', Q'' und Q''' unabhängig ausgewählt sind aus der Gruppe, bestehend aus Wasserstoff, Halogen, Kohlenwasserstoffresten, Halogenkohlenwasserstoffresten, Hydrocarbonoxyresten und Halogenhydrocarbonoxyresten; und n die Gesamtzahl der Monomereinheiten darstellt und eine ganze Zahl von wenigstens etwa 20 ist.

4. Zusammensetzung nach Anspruch 1, in welcher der Bestandteil (b) (I) Poly(2,6-dimethyl-1,4-phenylen)-Äther ist.

5. Zusammensetzung nach Anspruch 1, in welcher das organische Phosphat eine aromatische Phosphatverbindung der Formel

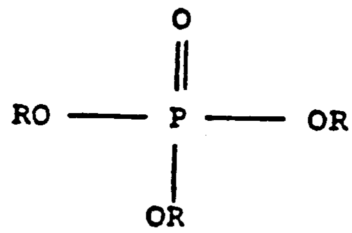

ist, worin R gleich oder unterschiedlich ist und Alkyl, Cycloalkyl, Aryl, alkylsubstituiertes Aryl, halogensubstituiertes Alkyl, Halogen oder eine Kombination von beliebigen der vorgenannten Stoffe ist mit der Maßgabe, daß wenigstens ein R gleich Aryl ist.

6. Zusammensetzung nach Anspruch 1, in welcher (b) (II) Triphenylphosphat ist.

7. Zusammensetzung nach Anspruch 6, in welcher das Triphenylphosphat isopropyliert ist.

8. Zusammensetzung nach Anspruch 1, in welcher der Bestandteil (b) (II) eine di- oder polyfunktionelle Verbindung oder ein Polymer mit der Formel

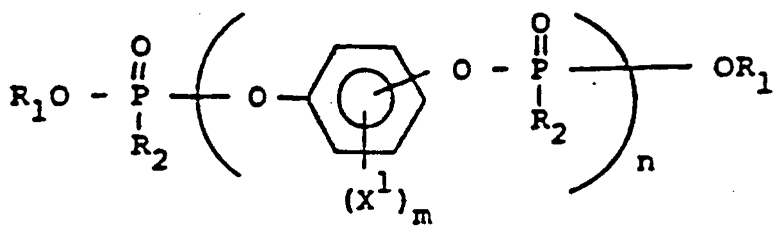

,

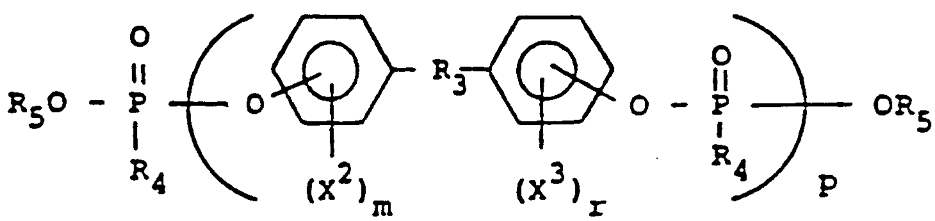

oder

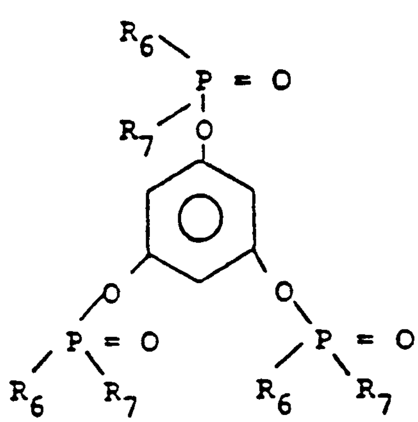

und Mischungen derselben ist, worin $R_1$, $R_3$ und $R_5$ unabhängig voneinander Kohlenwasserstoff sind, $R_2$, $R_4$, $R_6$ und $R_7$ unabhängig voneinander Kohlenwasserstoff oder Hydrocarbonoxy sind, $X^1$, $X^2$ und $X^3$ Halogen darstellen, m und r O oder ganze Zahlen von 1 bis 4 sind und n und p von 1 bis 30 sind.

**9.** Zusammensetzung nach Anspruch 8, in welcher der Bestandteil (b) (II) ein Bis-diphenylphosphat des Resorcinols ist.

**10.** Zusammensetzung nach Anspruch 8, in welcher der Bestandteil (b)(II) ein Bis-diphenylphosphat des Hydrochinons ist.

**11.** Zusammensetzung nach Anspruch 8, in welcher der Bestandteil (b)(II) ein Bis-diphenylphosphat von Bisphenol-A ist.

**12.** Zusammensetzung nach Anspruch 1, in welcher (b) (III) die Formel

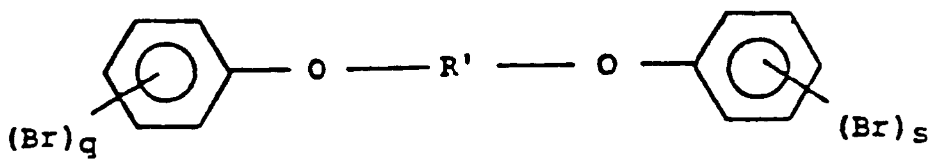

aufweist, worin R' geradkettiges oder verzweigtkettiges Alkylen mit 1 bis 10 Kohlenstoffatomen ist und g und s die Gesamtzahl der Bromatome an jedem Ring darstellen und unabhängig voneinander ganze Zahlen von 1 bis 5 sind.

**13.** Zusammensetzung nach Anspruch 1, in welcher (b) (III) 1,2-Bis(2,4,6-tribromphenoxy)-äthan ist.

**14.** Zusammensetzung nach Anspruch 1, in welcher (b) (III) 1,2-Bis(2,3,4,5,6-pentabromphenoxy)-äthan ist.

**15.** Zusammensetzung nach Anspruch 1, in welcher (b) (III) Tetrabrombisphenol-A oligomeres Polycarbonat ist.

**16.** Zusammensetzung nach Anspruch 1, in welcher das Gewichtsverhältnis von (b)(I) zu (b)(II) zwischen 1:1 und 20:1 liegt.

**17.** Zusammensetzung nach Anspruch 1, in welcher der Bestandteil (a) in einer größeren Menge vorhanden ist, (b)(I) in einer Menge zwischen etwa 5 bis etwa 70 Gewichtsteilen vorhanden ist, (b)(II) in einer Menge zwischen etwa 1 und etwa 20 Gewichtsteilen vorhanden ist und (B)(III) in einer Menge zwischen etwa 1 und etwa 20 Gewichtsteilen, bezogen auf 100 Teile der vereinigten Bestandteile (a) und (b)(I), vorhanden ist.

**18.** Zusammensetzung nach Anspruch 1, die weiterhin ein synergistisches Mittel für (b)(III) umfaßt.

**19.** Zusammensetzung nach Anspruch 18, in welcher das synergistische Mittel eine Antimonverbindung ist.

**20.** Zusammensetzung nach Anspruch 19, in welcher die Antimonverbindung Antimonoxid ist.

**21.** Zusammensetzung nach Anspruch 1, die ein modifizierendes elastomeres Polymer enthält.

**22.** Zusammensetzung nach Anspruch 21, in welcher das modifizierende elastomere Polymer ein Styrol-Butadien-Styrol-Blockcopolymer ist.

**23.** Zusammensetzung nach Anspruch 21, in welcher das modifizierende elastomere Polymer ein Styrol-Äthylen/Butylen-Styrol-Blockcopolymer ist.

**24.** Zusammensetzung nach Anspruch 21, in welcher das modifizierende elastomere Polymer ein Styrol-Isopren-Styrol-Blockcopolymer ist.

**25.** Zusammensetzung nach Anspruch 1, welche weiterhin einen Füllstoff enthält.

**Revendications**

**1.** Une composition thermoplastique comprenant un mélange de :

(a) une résine composée d'une résine ABS ; et

(b) une quantité efficace d'un agent inhibiteur de flamme, comprenant (i) une résine du type poly-(oxyphénylène), (ii) un phosphate organique, et (iii) un bis(phénoxy)alcane bromé ou un polycarbonate de tétrabromobisphénol-A oligomère ou un mélange des deux.

**2.** Une composition selon la revendication 1, dans laquelle le composant (a) est une résine acrylonitrilebutadiène-styrène.

**3.** Une composition selon la revendication 1, dans laquelle la résine du type poly(oxyphénylène), (b) (i), est un homo- ou un copolymère ayant des motifs de formule

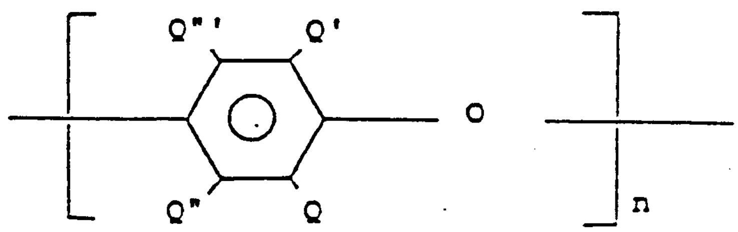

dans laquelle Q, Q', Q" et Q"' sont indépendamment choisis dans le groupe constitué des atomes d'hydrogène, et d'halogène, des radicaux hydrocarbonés, des radicaux hydrocarbonés halogénés, des radicaux hydrocarbyloxy et des radicaux hydrocarbyloxy halogénés ; et n représente le nombre total de motifs monomères et est un entier valant au moins environ 20.

**4.** Une Composition selon la revendication 1, dans laquelle le composant (b) (i) est un poly[2,6-diméthyl-1,4-phénylène)oxy].

**5.** Une composition selon la revendication 1, dans laquelle le phosphate organique est un phosphate aromatique de formule

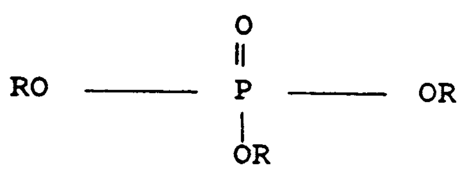

dans laquelle les groupes R sont identiques ou différents et représentent chacun un groupement alkyle, cycloalkyle, aryle, aryle avec un substituant alkyle, ou alkyle avec un substituant halogène, ou un atome d'halogène, étant entendu qu'au moins un R est un groupe aryle.

**6.** Une composition selon la revendication 1, dans laquelle (b) (ii) est un phosphate de triphényle.

**7.** Une composition selon la revendication 6, dans laquelle le phosphate de triphényle est isopropylé.

**8.** Une Composition selon la revendication 1, dans laquelle le composant (b) (ii) est un composé ou un polymère di- ou poly-fonctionnel, ayant la formule

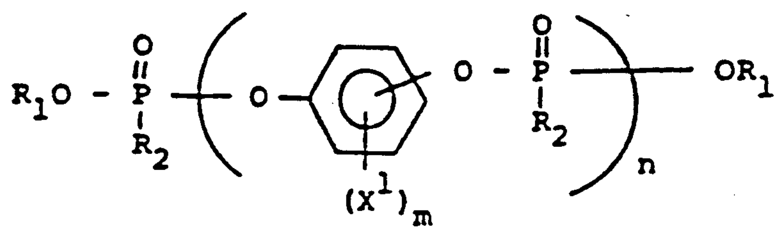

,

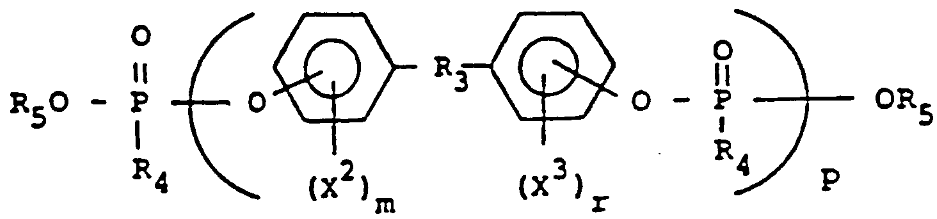

, et

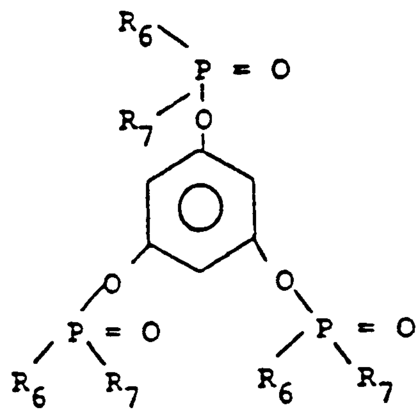

ou un mélange de ceux-ci, formules dans lesquelles $R_1$, $R_3$ et $R_5$ représentent chacun, indépendamment, un groupe hydrocarboné, $R_2$, $R_4$, $R_6$ et $R_7$ représentent chacun, indépendamment, un groupe hydrocarboné ou hydrocarbyloxy ; $X^1$, $X^2$ et $X^3$ sont des atomes d'halogène, m et r valent 0 ou sont des entiers valant de 1 à 4, et n et p valent de 1 à 30.

**9.** Une composition selon la revendication 8, dans laquelle le composant (b) (ii) est un bis-(diphénylphosphate) de résorcinol.

**10.** Une composition selon la revendication 8, dans laquelle composant (b) (ii) est un bis-(diphénylphosphate d'hydroquinone.

**11.** Une composition selon la revendication 8, dans laquelle le composant (b) (ii) est un bis-(diphénylphosphate) de bisphénol-A.

**12.** Une composition selon la revendication 1, dans laquelle (b) (iii) a la formule

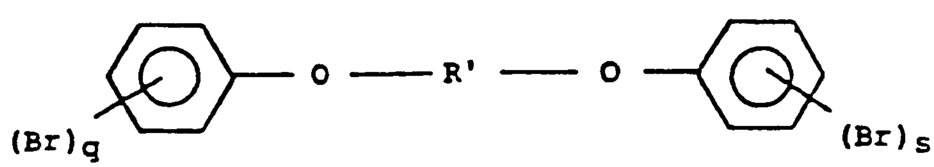

dans laquelle R' est un groupe alkylène, linéaire ou ramifié, ayant de 1 à 10 atomes de carbone, et q et

s représentent le nombre total d'atomes de brome sur chaque cycle et sont indépendamment des entiers de 1 à 5.

**13.** Une composition selon la revendication 1, dans laquelle (b) (iii) est du 1,2-bis(2,4,6-tribromophénoxy)-éthane.

**14.** Une composition selon la revendication 1, dans laquelle (b) (iii) est du 1,2-bis(2,3,4,5,6-pentabromophénoxy)étane.

**15.** Une composition selon la revendication 1, dans laquelle (b) (iii) est un polycarbonate de tétrabromobisphénol-A oligomère.

**16.** Une composition selon la revendication 1, dans laquelle le rapport pondéral du (b) (i) au (b) (ii) est compris entre 1:1 et 20:1.

**17.** Une composition selon la revendication 1, dans laquelle le composant (a) est présent en une quantité majeure, (b) (i) est présent en une quantité comprise entre environ 5 et environ 70 parties en poids, (b) (ii) est présent en une quantité comprise entre environ 1 et environ 20 parties en poids, et (b) (iii) est présent en une quantité comprise entre environ 1 et environ 20 parties en poids, pour 100 parties de (a) et (b) (i) combinés.

**18.** Une composition selon la revendication 1, qui inclut aussi un agent synergique pour (b) (iii).

**19.** Une composition selon la revendication 18, dans laquelle l'agent synergique est un composé à base d'antimoine.

**20.** Une composition selon la revendication 19, dans laquelle le composé à base d'antimoine est de l'oxyde d'antimoine.

**21.** Une composition selon la revendication 1, qui inclut un polymère élastomère modificateur.

**22.** Une composition selon la revendication 21, dans laquelle le polymère élastomère modificateur est un copolymère bloc styrène-butadiène-styrène.

**23.** Une composition selon la revendication 21, dans laquelle le polymère élastomère modificateur est un copolymère bloc styrène-éthylène/butylène-styrène.

**24.** Une composition selon la revendication 21, dans laquelle le polymère élastomère modificateur est un copolymère bloc styrène-isoprène-styrène.

**25.** Une composition selon la revendication 1, qui inclut aussi une charge.